# EUROPÄISCHE PATENTANMELDUNG

(11) **EP 1 231 105 A2**
(43) Veröffentlichungstag der Anmeldung: **14.08.2002**
(21) Anmeldenummer: 02002776.9
(22) Anmeldetag: 07.02.2002
(51) Int. Cl.: B60P 3/08

(54) **Hub- und Senkeinrichtung, insbesondere für einen Autotransporter bzw. einen Autotransport-Anhänger**

(30) Priorität: 08.02.2001 DE 10105701
(71) Anmelder: Wensauer Automobile AG, 93476 Blaibach (DE)
(72) Erfinder: Vachal, Markus, 93486 Runding (DE)
(74) Vertreter: Flach, Dieter Dipl.-Ing

(57) **Zusammenfassung**

Eine verbesserte Hub- und Senkeinrichtung insbesondere für Autotransporter und Antotransport-Anhänger weist unter anderem folgende Merkmale auf
- es ist lediglich eine Hubeinrichtung in Form einer Hubzylinderanordnung (23), bestehend aus zumindest einem Hubzylinder und vorzugsweise aus zwei parallel zueinander angeordneten Hubzylindern (23), vorgesehen,
- über die Hubzylinderanordnung(23) ist sowohl die Verstellung der oberen Plattform (3) ausgehend von ihrer abgesenkten Position in die Zwischenposition als auch von der Zwischenposition in die angehobene Position durchführbar.

## Beschreibung

Die Erfindung betrifft eine Hub- und Senkeinrichtung, insbesondere für einen Autotransporter bzw. einen Autotransport-Anhänger nach dem Oberbegriff des Anspruches 1.

Hub- und Senkeinrichtungen für Autotransporter sind hinlänglich bekannt. Üblicher Weise umfassen derartige Autotransporter zwei übereinander angeordnete Transportebenen. Dabei ist die untere Ebene nicht verstellbar. Die obere Ebene ist in ausreichendem Abstand oberhalb der unteren Ebene vorgesehen. Sie ist dabei um eine in der Regel in Fahrtrichtung vorne liegende Horizontalachse in vorgegebener Höhe definiert und um diese Horizontalachse heb- und absenkbar. In der abgesenkten Position verläuft dabei die obere Transportebene von der hochliegenden, in Fahrtrichtung vorne angeordneten horizontalen Achse schräg nach hinten, so dass in dieser schrägen Position Fahrzeuge auf die obere Plattform gefahren werden können. Soll auch die untere Plattform mit Fahrzeugen befüllt werden, so werden die auf die obere Plattform gefahrenen PKW's mittels Hubzylindern um die erwähnte, in Fahrtrichtung vorne und oben liegend angeordnete Schwenkachse angehoben und dann die untere Plattform befahren.

Eine gattungsbildende Hub- und Senkeinrichtung für eine Transporteinheit ist aus der DE 693 08 971 T2 bekannt geworden. Diese Vorveröffentlichung beschreibt eine verwandelbare Tragstruktur, wie sie insbesondere als Autotransporter verwendet werden kann. Dazu ist ein containerartiges Fahrzeug vorgeschlagen, welches eine untere Ladeebene aufweist, auf welcher eine flach absenkbare obere Tragfläche abgelegt werden kann. Diese Tragfläche kann von der flach auf der unteren Ladeebene 22 befindlichen Position in eine angehobene Position und umgekehrt verstellt werden. Dazu wird die obere Tragfläche zunächst an ihrer vorlaufenden Seite unter Bildung einer schiefen Ebene leicht angehoben, so dass in dieser Position ein Fahrzeug von der abgesenkten Position auf diese nach Art einer schiefen Ebene schräggestellte Plattform hinauffahren kann. An der angehobenen Seite ist eine verriegelbare Querachse vorgesehen, um welche nunmehr die gesamte Plattform unter Durchführung eines weiteren Anhebvorganges verschwenkt werden kann, bis die zunächst völlig abgesenkte Seite der Plattform über die vorlaufende Querachse hinaus weiter nach oben angehoben wird. Dadurch bildet sich ein freier Raum unterhalb der Plattform, so dass nunmehr auf die untere Ladeebene in diesem Freiraum ein weiteres Fahrzeug hineinfahren kann. Für den Anhebvorgang in die Zwischenposition unter Bildung der schiefen Ebene ist eine erste Hubeinrichtung und für den Anhebvorgang von der Zwischenposition in die endgültige angehobene Position eine weitere Hubeinrichtung notwendig. Alternativ kann der Hubvorgang auch durch externe Hubeinrichtungen durchgeführt werden.

Aufgabe der vorliegenden Erfindung ist es, ausgehend von diesem Stand der Technik, eine vereinfachte und verbesserte Hub- und Senkeinrichtung zu schaffen, die sicher betreibbar ist und dabei noch einfacher aufgebaut ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird auf verblüffende Art und Weise ein gegenüber dem herkömmlichen Stand der Technik deutlich verbessertes Hub- und Senksystem, insbesondere für Autotransporter geschaffen.

Das Hub- und Senksystem geht von der bekannten Lösung aus, dass die obere Plattform bei Bedarf völlig auf der unteren Plattform abgelegt werden kann, die dabei gegebenenfalls sogar eine völlig horizontale Grundstellung einnimmt. Die Ausbildung kann dabei derart sein, dass die auf der untern Plattform oder Ladefläche abgelegte obere Plattform praktisch über diese nicht übersteht, also in keinem nennenswerten Umfang zu einer Gesamterhöhung führt.

Obgleich eine Verstellung der oberen Plattform, d.h. des oberen Hubplateaus von der unten liegenden einen Endstellung in ihre oben liegende, angehobene zweite Endstellung unter Verwendung eines entsprechenden Hubzylindersystems in einem Schritt durchgeführt werden kann, wird bevorzugt eine Zwei-Stufen-Verstellung vorgesehen. Diese ermöglicht zudem, dass die Verstellung von abgesenkter Lage in angehobene Position mit nur einem Hubzylindersystem, vorzugesweise einem Hubzylinderpaar bewerkstelligt wird.

Während eines ersten Verstellschrittes kann nämlich durch die Hubzylindereinrichtung die auf der unteren Plattform abgelegte obere Plattform vorzugsweise mit translatorischer Komponente in eine Zwischenposition längs einer Führungseinrichtung verstellt werden, bei der ihre Plattform im Bereich ihrer horizontalen Verschwenkachse von einer unten abgelegten in eine angehobene Position angehoben wird. Bevorzugt besteht dabei die Führungseinrichtung aus einer Verschwenkhebelanordnung, die sich in der Grundposition ebenfalls in eingefahrener nicht vorstehender Endlage befindet und demgegenüber in eine vertikale angehobene Position verschwenkt wird. In dieser Zwischenposition ist also die Plattform mit ihrem üblicherweise in Fahrrichtung liegenden Stirnseitenende um ihre dort ausgebildete Horizontalachse angehoben, wohingegen ihr gegenüberliegendes nachlaufendes Stirnseitenende, welches bevorzugt über Rollen abgestützt ist, sich noch auf dem unteren Plattformniveau befindet. In dieser Position wird dann während eines zweiten Verstellschrittes bei nunmehr fixierter horizontaler Verschwenkachse die Plattform um diese in ihre angehobene Endstellung weiterverschwenkt.

Erfindungsgemäß ist aber nunmehr vorgesehen, dass der gesamte Verschwenkmechanismus durch lediglich ein Hubzylinderanordnung, d.h. insbesondere einen einzigen Hubzylinder oder beispielsweise ein Hubzylinderpaar realisiert werden kann. Die Anordnung ist dabei derart, dass während des ersten Verstellschrittes während des Anhebens der Plattform die Hubzylinder eingefahren werden, und dabei die in ihrer Horizontalposition befindliche abgesenkte obere Plattform zunächst vorzugsweise mit translatorischer Komponente in eine Zwischenstellung verschoben und dabei mittels der bevorzugt vorgesehenen Schwenkhebeleinrichtung mit ihrer horizontalen Verschwenkachse in die erwähnte Zwischenstellung angehoben werden. In dieser Stellung werden dann die horizontalen Verschwenkhebel gesichert, vorzugsweise hydraulisch gesichert. Wird in dieser Position die Hubzylinderanordnung wieder ausgefahren, wird dadurch automatisch die obere Plattform von ihrer erwähnten Zwischenstellung um die Horizontalachse in ihre endgültige obere angehobene Stellung verschwenkt.

Ein Absenken der angehobenen Plattform erfolgt in umgekehrter Weise in den beiden erwähnten Schritten.

Die Erfindung wird nachfolgend anhand von Ausführungsbeispielen näher erläutert. Dabei zeigen im einzelnen:
- Figur 1:: eine schematische Seitenansicht auf einen Doppel-Anhänger eines Autotransporters mit senk- und hebbarer oberer Plattform;
- Figur 2a:: eine vergrößerte schematische Detaildarstellung aus Figur 1 in Seitenansicht;
- Figur 2b :: eine entsprechende schematische Draufsicht auf das Ausführungsbeispiel nach Figur 1a;
- Figur 3a :: eine zu Figur 1a entsprechende Darstellung, bei welcher die heb- und senkbare obere Plattform in eine Zwischenposition angehoben ist;
- Figur 3b :: eine entsprechende schematische Draufsicht auf das Ausführungsbeispiel gemäß Figur 2a in der erwähnten Zwischenposition;
- Figur 4a:: eine Frontalansicht eines verschwenkbaren Doppelhebel- oder -scherensystems;
- Figur 4b:: eine Seitenansicht auf das Verschwenksystem gemäß 4a;
- Figur 5a :: eine zu Figur 1a und 1b entsprechende schematische Seitenansicht, bei welcher die heb- und senkbare obere Plattform in ihre obere Endposition angehoben ist, und
- Figur 5b :: eine schematische Draufsicht auf das in Figur 3a gezeigte Ausführungsbeispiel bei in oberer Endposition angehobener Plattform.

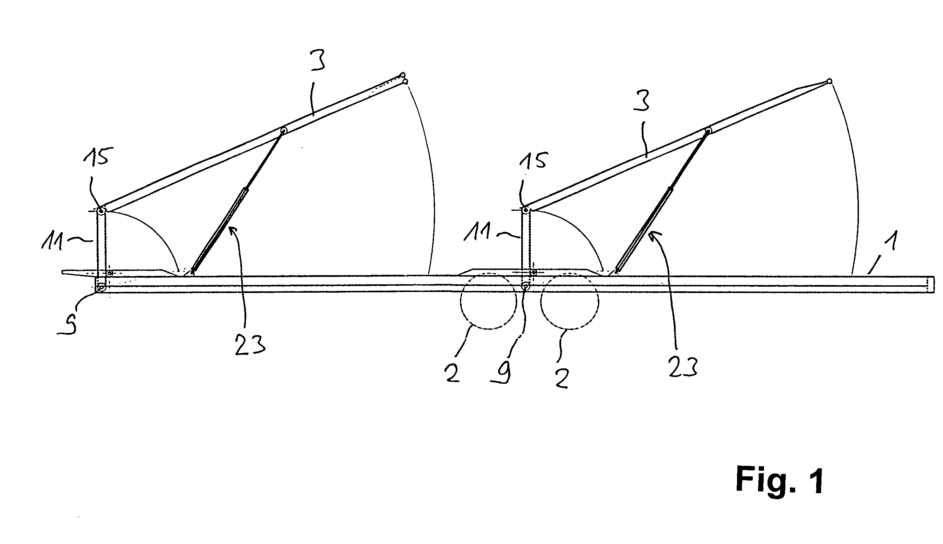

In Figur 1 ist in schematischer Seitenansicht ein erfindungsgemäßer Autotransporter mit zwei unteren Plattformen oder Plateaus und demgegenüber zwei in angehobener Position verschwenkte obere Plateaus gezeigt. Die untere Plateaufläche ist dabei durchgängig gestaltet und von hinten nach vorne durchgängig befahrbar. Die oberen Plateaus sind getrennt bedien- und steuerbar und getrennt befahrbar. Der weitere Aufbau und Funktionsweise wird anhand der nachfolgenden Figuren im Detail geschildet, wobei in diesen Figuren lediglich ein Teil des in Figur 1 wiedergegebenen Autotransporters gezeigt ist, nämlich etwa die hintere Hälfte des Autotransporters mit der in Figur 1 gezeigten hinteren von einer unteren in eine obere Position verfahrbaren oberen Plattform. Dabei ist das Ausführungsbeispiel anhand eines Doppelachs-Anhängers gezeigt, dessen seitliche Räder mit Bezugszeichen 2 in den Figuren wiedergegeben ist.

Es wird zunächst auf die Figuren 1a und 1b verwiesen, in denen in schematischer Darstellung etwa die hintere Hälfte des in Figur 1 wiedergegebenen Autotransporters gezeigt ist, welcher eine untere Plattform 1 und eine darauf befindliche obere Plattform 3 umfasst, die sich in ihrer unteren Endposition befindet. In dieser unteren Position ist die obere Plattform unmittelbar auf der unteren Plattform aufliegend abgelegt, so dass sich der gesamte Aufbau kaum erhöht.

Der so gestaltete Hänger weist ferner noch an seinem in üblicher Fahrtrichtung vorlaufenden Ende der verfahrbaren Plattform 3 jeweils eine Kippachse 9 auf, um welche ein Hebelsystem 11, welches nachfolgend teilweise auch als Doppelschere bezeichnet wird, verschwenkbar ist. Die unten liegende Kippachse 9 ist bezüglich des Fahrzeugrahmens oder -unterbaus 13 ortsfest angeordnet.

Gegenüberliegend zu der unten liegenden Kippachse 9 ist am freien Ende des Hebelsystems bzw. der Doppelschere 11 eine Verschwenkachse 15 ausgebildet, worüber das Hebelsystem 11 im gezeigten Ausführungsbeispiel mit der heb- und senkbaren oberen Plattform 3 an deren vorlaufenden Ende 17 gelenkig verbunden ist.

Die obere Plattform 3 ist ferner noch an ihrem rückwärtigen nachlaufenden Ende 19 mit Stützrollen 21 versehen, worauf nachfolgend noch eingegangen wird.

Schließlich ist an den beiden Längsseitenbereichen des Fahrzeugrahmens jeweils noch ein Hubzylinder 23 vorgesehen, der an seinem in Fahrtrichtung vorne liegenden Hubzylinderende 23', bezogen auf den Unterbau oder Fahrzeugrahmen 13, ortsfest aber gelenkig abgestützt ist.

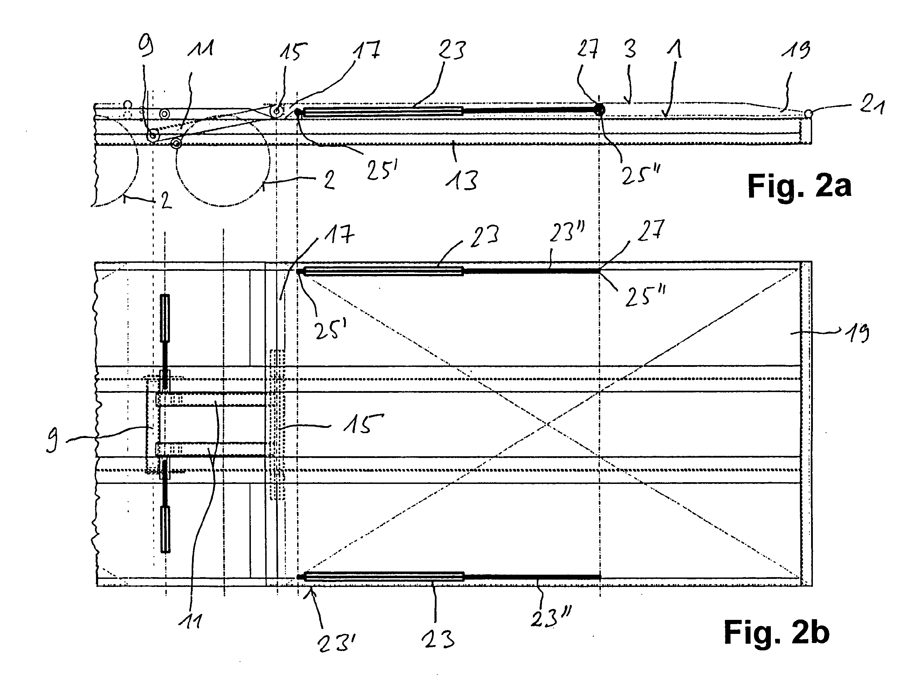

In der in Figur 2a und 2b gezeigten Position, in welcher die obere Plattform 3 in ihrer unteren Endstellung in Horizontallage abgelegt ist, nehmen die beiden parallel zueinander angeordneten Hubzylinder 23 ihre gegebenenfalls maximal ausgefahrene Position ein, in der also die Kolbenstangen 23" maximal ausgefahren sind. Das Ende der Kolbenstangen 23" ist dabei an einer Gelenkverbindung 27 etwa im mittleren Längsbereich der heb- und senkbaren oberen Plattform an dieser angelenkt.

Wie aus der Seitendarstellung gemäß Figur 2a ersichtlich ist, ist die Kippachse 9 unterhalb der Plattformebene E liegend angeordnet, wobei diese Plattformebene E bestimmt wird durch die vor- und nachlaufenden Angriffspunkte 25' und 25", an welchen die Hubzylinder 23 einmal vorlaufend gegenüber dem Fahrzeugrahmen bwz. dem Unterbau 13 und zum anderen an ihrem gegenüberliegenden Ende an der heb- und senkbaren Plattform 3 abgestützt sind.

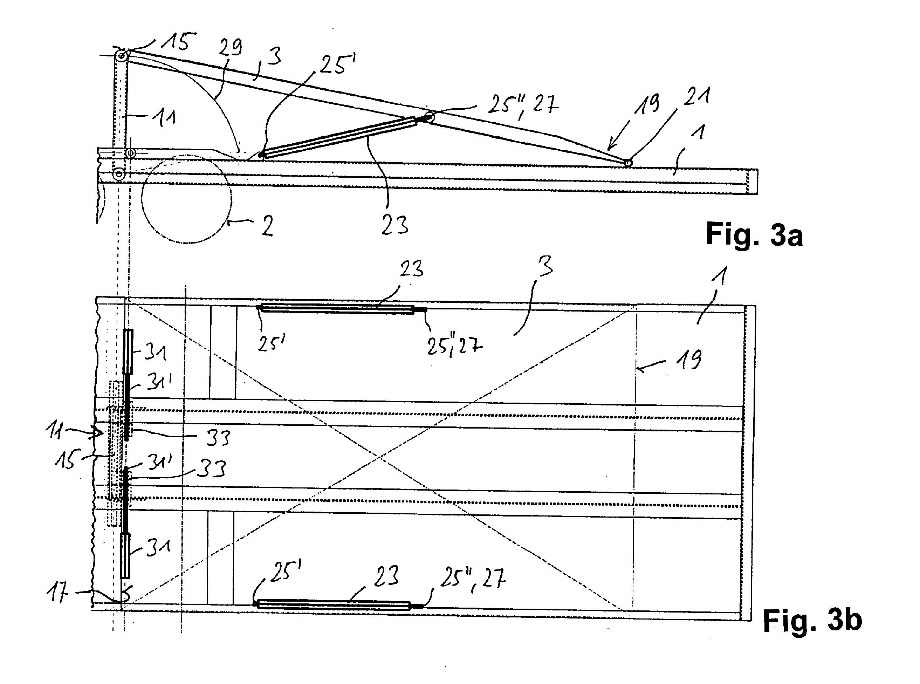

Soll nunmehr die Plattform 3 ausgehend von der abgesenkten Position in Figur 3a und 3b zunächst in eine Zwischenposition gemäß Figur 2a und 2b verfahren werden, so werden die beiden parallel angeordneten Hubzylinder 23 eingefahren. Dies hat zur Folge, dass die obere Plattform 3 mit translatorischer Komponente gegenüber dem Fahrzeugrahmen in Fahrtrichtung nach vorne bewegt wird, da die Hubzylinder 23 an ihrem vorlaufenden Angriffspunkt 25' fahrzeugrahmenfest abgestützt sind und durch Einfahren ihrer Kolbenstange 23" die obere Plattform nach vorne verstellen, wobei während dieser Verstellbewegung die obere Plattform an ihrem nachlaufenden Ende über die Stützrollen 21 gegenüber der unteren Plattform 1 abgestützt und über die Stützrollen 21 gegenüber der unteren Plattform 1 verfahrbar ist.

Die Kinematik ist derart, dass dabei die horizontale Verschwenkachse 15 als Kniegelenkachse dient, wobei während der zunehmenden Einfahrbewegung der Hubzylinder 23 dadurch die Doppelschere 11 von ihrer in Figur 1a gezeigten Grundstellung entgegen dem Uhrzeigersinn in die in Figur 2a wiedergegebene angehobene anschlagsbegrenzte Endstellung verschwenkt wird. Die obere horizonale Verschwenkachse 15 beschreibt dabei die mit Bezugszeichen 29 in Figur 3a wiedergegebene teilkreisförmige Bewegungsbahn. Zu dieser zwangsweisen Verschwenkbewegung des Hebel- oder Doppelscherensystems 11 kommt es dadurch, dass die Kippachse 9 des Hebelsystems 11 unterhalb der durch die beiden Angriffspunkte oder -achsen 25' und 25" der Hubzylinderanordnung liegt. Eine translatorische in Fahrrichtung nach vorne gerichtete Kraftkomponente durch Einfahren der Hubzylinder 23 erzeugt dadurch automatisch eine Verschwenkbewegung bzgl. des Hebelsystems 11.

In dieser in Figur 3a und 3b gezeigten Zwischenposition ist also das vorlaufende Ende 17 der oberen Plattform bereits in seine angehobenen Position verstellt, wohingegen das nachlaufende Ende 19 über die Stützrollen 21 noch auf der unteren Plattform 1 abgestützt ist. Die Hubzylinder 23 haben dabei auch eine leichte Verschwenkbewegung um ihren vorlaufenden Angriffspunkt 25' im Gegenuhrzeigersinn durchgeführt.

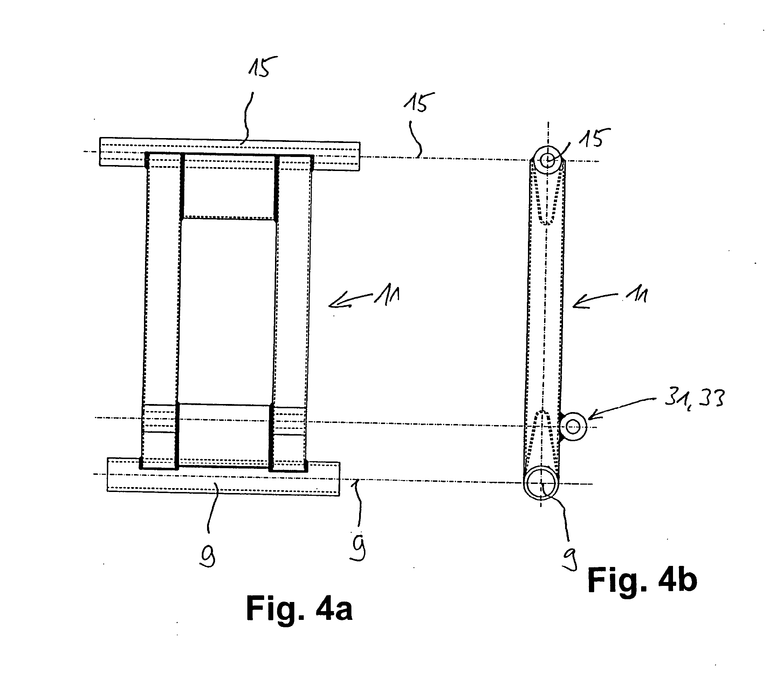

In dieser in Figur 3a gezeigten Stellung wird nunmehr das Hebelsystem bzw. die Doppelschere 11 in ihrer gezeigten Vertikalstellung gesichert. Dies kann beispielsweise mechanisch erfolgen, möglicherweise auch über eine automatische Rastverriegelung. Bevorzugt ist jedoch ein hydraulisch betätigtes Sicherungssystem vorgesehen, nämlich zwei Verriegelungszylinder 31, die von ihrer in Figur 2b gezeigten eingefahrenen Stellung in ihre in Figur 3a wiedergegebene Stellung ausgefahren sind, in welcher die zugehörigen Kolbenstangen 31" entsprechende Ausnehmungen oder Hinterschneidungen 33 hintergreifen und somit die Doppelschere oder das Hebelsystem 11 in ihrer in Figur 3a gezeigten Stellung sichern. In Figur 4a und 4b ist dabei das Hebelsystem 11, welches teilweise auch als Doppelschere bezeichnet wird, einmal in Frontalansicht und einmal in Seitenansicht wiedergegeben.

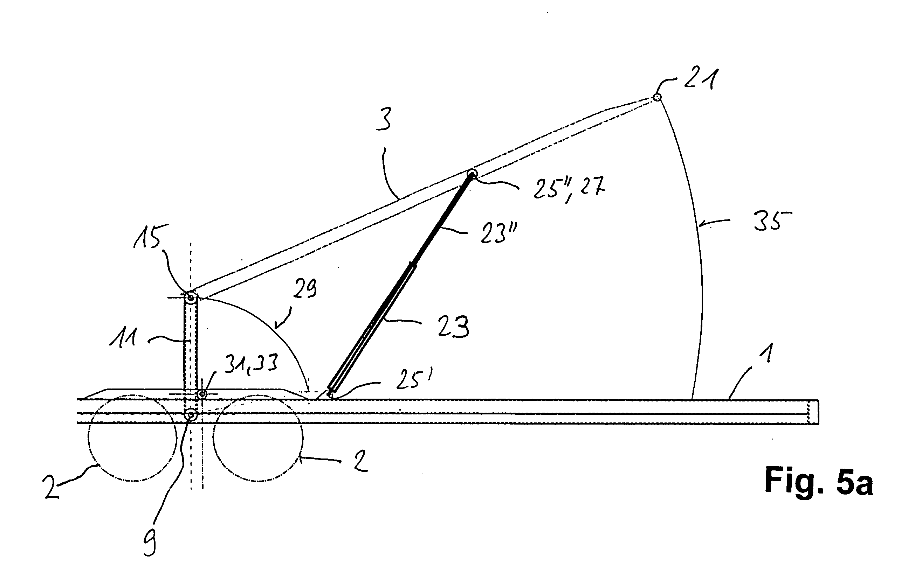

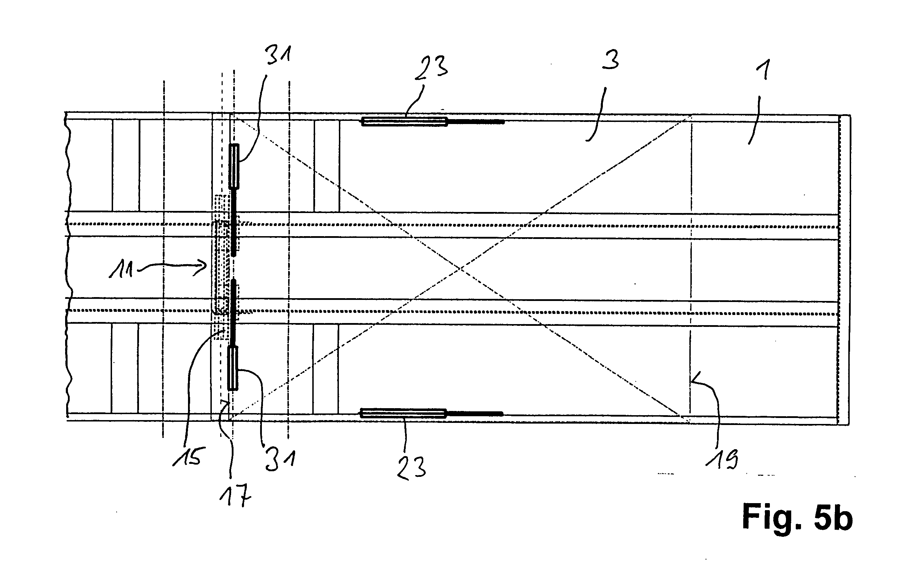

In einem nunmehr zweiten Verfahrensschritt werden die Hubzylinder 23 wieder ausgefahren, wobei dabei nunmehr die obere, an ihrem vorderen Ende bereits angehobene Plattform 3 um die angehobene horizontale Verschwenkachse 15 entgegen dem Uhrezeigersinn gemäß der Kurvenbahn 35 in die in Figur 5a und 5b wiedergegebene Endlage angehoben wird. Die Länge und Höhe der Doppelschere 11 ist so bemessen, dass sie ausreichend hoch ist, so dass auf der unteren Plattform entsprechende PKW's oder sonstige Fahrzeuge positioniert werden können, ohne mit der Unterseite der angehobenen oberen Plattform zu kollidieren.

Sollen auf der oberen Plattform Auto's transportiert werden, so werden natürlich die PKW's auf die obere Plattform gefahren, wenn diese ihre in Figur 1a und 1b gezeigte abgesenkte Position einnimmt. Von da aus kann die Plattform 3 mit den darauf geparkten PKW's in die in Figur 3a und 3b gezeigte angehobene Position verstellt werden. Anschließend kann die untere Plattform befahren werden. Der Entladungsvorgang und die Absenkung der oberen Plattform verläuft in umgekehrter Weise in zwei Schritten, wobei nach Absenkung der oberen Plattform 3 von Figur 5a in die in Figur 3a gezeigte Zwischenposition dann die erwähnten Verriegelungszylinder 31 wieder in ihre eingeschränkte Position zurückgefahren werden und dadurch die Verriegelung freigeben. Anschließend können die Hubzylinder 23 wieder ausgefahren werden, wodurch die weitere Absenkbewegung bis in die untere Endlage gemäß Figur 1a und 1b durchgeführt werden kann.

Das geschilderte System kann, wie aus Figur 1 ersichtlich, auch auf einer Doppelanhänger-Anordnung umgesetzt werden, indem beispielsweise hintereinander liegend zwei entsprechend getrennte, zwischen ihrer oberen und unteren Position verstellbare obere Plattformen 3 vorgesehen sind, die jeweils über eine ihnen zugeordnete Doppelschere verschwenkbar sind. Genauso kann ein entsprechendes System auf einem mit einer entsprechende Ladefläche versehenen Transportfahrzeug realisiert werden.

Grundsätzlich wäre es auch möglich, anstelle der nach Art eines Hebels gestalteten Doppelschere 11 eine andere Führungseinrichtung zu verwenden, beispielsweise eine Führungseinrichtung mit seitlich von der unteren Plattformebene nach oben ansteigenden Führungsschienen, so dass die horizontale Verschwenkachse 15 durch Einfahren der Hubzylinder 23 von ihrer in Figur 1a in eine mit der Figur 2a vergleichbare Stellung in ihrem vorlaufenden Bereich angehoben werden könnte. Nach entsprechender Sicherung der Horizontalachse kann dann die weitere Hubbewegung bis in die in Figur 3a gezeigte Endstellung vorgenommen werden.

Werden schließlich mehrere Hubzylinder vorgesehen, so könnte die Verstellbewegung auch gleichzeitig dergestalt durchgeführt werden, dass die Plattform, ausgehend von der Grundstellung gemäß Figur 1, über das bevorzugt nach Art einer Doppelschere gestaltete Führungssystem vorne angehoben und dabei gleichzeitig um die angehobene vorlaufende Verschwenkachse auch in ihrem nachlaufenden Bereich mit nach oben verschwenkt wird. Der Gesamtaufwand wäre aber deutlich größer.

## Patentansprüche

1. Hub- und Senkeinrichtung, insbesondere für Autotransporter und Autotransport-Anhänger, mit folgenden Merkmalen:
- es ist zumindest eine untere und zumindest eine obere Plattform (1, 3) vorgesehen,
- die obere Plattform (3) ist mittels einer Hubeinrichtung zwischen einer abgesenkten und einer Zwischenposition und über eine Hubrichtung zwischen der Zwischenposition und einer angehobenen Position verstellbar,
- die obere Plattform (3) ist dabei um eine vorlaufende, zumindest annähernd horizontale Verschwenkachse (15) zwischen einer angehobenen und einer abgesenkten Position verschwenkbar,
- die vorlaufende Verschwenkachse (15) der heb- und senkbaren oberen Plattform (3) ist mittels einer Führungseinrichtung (11) von einer abgesenkten in eine angehobene Position und umgekehrt verfahrbar, und
- spätestens nach Erreichen der Verschwenkachse (15) in ihrer angehobenen Position unter Anhebung der oberen Plattformebene in ihre Zwischenposition ist die obere Plattform (3) um diese Verschwenkachse in ihre obere, vollständig angehobene Endposition verstellbar,
**gekennzeichnet durch** die folgenden weiteren Merkmale:
- es ist lediglich eine Hubeinrichtung in Form einer Hubzylinderanordnung (23), bestehend aus zumindest einem Hubzylinder und vorzugsweise aus zwei parallel zueinander angeordneten Hubzylindern (23), vorgesehen,
- über die Hubzylinderanordnung(23) ist sowohl die Verstellung der oberen Plattform (3) ausgehend von ihrer abgesenkten Position in die Zwischenposition als auch von der Zwischenposition in die angehobene Position durchführbar.

2. Hub- und Senkeinrichtung nach Anspruch 1, **dadurch gekennzeichnet, dass** der zumindest eine Hubzylinder (23) als doppelt wirkender Hubzylinder ausgebildet ist.

3. Hub- und Senkeinrichtung nach Anspruch 1 oder 2, **dadurch gekennzeichnet, dass** die vorlaufende Verschwenkachse (15) der heb- und senkbaren oberen Plattform (3) nach Erreichen ihrer Zwischenposition in dieser verriegelbar ist, und dass erst nach erfolgter Verriegelung die weitere Hubbewegung der Plattform (3) von dieser Zwischenposition ausgehend in die obere angehobene Position durchführbar ist.

4. Hub- und Senkeinrichtung nach einem der Ansprüche 1 bis 3, **dadurch gekennzeichnet, dass** die Führungseinrichtung aus einem Hebelsystem bzw. einer Doppelschere (11) besteht, welche um eine fahrgestell- oder unterbaufeste Kippachse (9) zwischen einer nach unten abgesenkten und einer nach oben vorstehenden Position verstellbar ist, und dass versetzt liegend zur Kippachse (9) an dem Hebelsystem bzw. der Doppelschwere (11) die Verschwenkachse (15) gelagert ist, worüber die obere Plattform (3) verschwenkbar gehalten ist.

5. Hub- und Senkeinrichtung nach Anspruch 4, **dadurch gekennzeichnet, dass** das verschwenkbare Hebelsystem bzw. die vorgesehene Doppelschere (11) in mit seiner bzw. ihrer Verschwenkachse (15) gegenüber der unteren Plattformebene nach oben vorstehenden Verstellposition hydraulisch sicherbar ist, vorzugsweise mit zumindest einem oder zwei Sicherungszylindern (31).

6. Hub- und Senkeinrichtung nach einem der Ansprüche 1 bis 5, **dadurch gekennzeichnet, dass** die Hubzylinder (23) so eingebaut sind, dass ausgehend von der einen Grundstellung, in der die verfahrbare Plattform (3) auf der unteren Plattform (1) abgelegt ist, zur Erzielung einer Zwischenposition, in der die verfahrbare obere Plattform (3) zumindest in ihrem vorlaufenden Bereich mit ihrer horizontalen Verschwenkachse (15) angehoben ist, durch Einfahren der Hubzylinder (23) verstellbar ist.

7. Hub- und Senkeinrichtung nach einem der Ansprüche 1 bis 6, **dadurch gekennzeichnet, dass** der zumindest eine und die vorzugsweise vorgesehenen beiden Hubzylinder (23) so angeordnet sind, dass die verfahrbare Plattform (3) ausgehend von ihrer in ihrem vorlaufenden Bereich angehobenen Zwischenposition in ihre endgültig gegenüber der unteren Plattform (1) beabstandeten oberen angehobenen Position durch Ausfahren der Hubzylinder (23) verfahrbar ist.

8. Hub- und Senkeinrichtung nach einem der Ansprüche 1 bis 7, **dadurch gekennzeichnet, dass** der zumindest eine Hubzylinder (23) mit seiner wesentlichen Erstreckungskomponente in Längsrichtung der Plattformen (1, 3) verläuft und damit quer zur Verschwenkachse (15) des Hebelsystems (11) so angeordnet ist, dass die Kolbenstange (23') von der Verschwenkachse (15) weggerichtet ausfahrbar ist.

9. Hub- und Senkeinrichtung nach einem der Ansprüche 4 bis 8, **dadurch gekennzeichnet, dass** die unterbau- oder fahrzeugrahmenortsfeste Kippachse (9) des Hebelsystems (11) unterhalb einer Ebene liegt, die durch die beiden gegenüberliegenden Angriffspunkte (25', 25") die Hubzylinder in abgesenkter Position der oberen Plattform (3) festgelegt ist.

10. Hub- und Senkeinrichtung nach einem der Ansprüche 1 bis 9, **dadurch gekennzeichnet, dass** das Hebel- oder Hubscherensystem (11) mittels Bolzen mittig zwischen zwei Rahmenlängsträgern eingebaut ist und in abgesenkter Position überfahrbar ist.

11. Hub- und Senkeinrichtung nach einem der Ansprüche 1 bis 10, **dadurch gekennzeichnet, dass** der zumindest eine Hubzylinder (23) und vorzugsweise die beiden parallel zueinander angeordneten Hubzylinder (23) mit ihrem der horizontalen Verschwenkachse (15) näherliegenden Ende fahrzeugrahmenseitig und mit ihrem zur horizontalen Verschwenkachse (15) entfernt liegenden Ende an der oberen heb- und senkbaren Plattform (3) angelenkt sind.
